(19) Europäisches Patentamt / European Patent Office / Office européen des brevets

(11) **EP 2 877 539 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **13734330.7**

(22) Anmeldetag: **20.06.2013**

(51) Int Cl.:
*C09C 1/00* (2006.01)    *C09C 1/36* (2006.01)
*C09D 7/62* (2018.01)    *D21H 27/00* (2006.01)

(86) Internationale Anmeldenummer:
**PCT/EP2013/001828**

(87) Internationale Veröffentlichungsnummer:
**WO 2014/000874 (03.01.2014 Gazette 2014/01)**

(54) **TITANDIOXID-HALTIGE UND CARBONAT-HALTIGE KOMPOSITPIGMENTE UND VERFAHREN ZU IHRER HERSTELLUNG**

TITANIUM DIOXIDE-CONTAINING AND CARBONATE-CONTAINING COMPOSITE PIGMENTS AND METHOD FOR PRODUCING SAME

PIGMENTS COMPOSITES CONTENANT DU DIOXYDE DE TITANE ET DU CARBONATE ET PROCÉDÉ POUR LEUR PRÉPARATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2012 DE 102012012899**
**10.06.2013 DE 102013009635**

(43) Veröffentlichungstag der Anmeldung:
**03.06.2015 Patentblatt 2015/23**

(73) Patentinhaber: **KRONOS INTERNATIONAL, INC.**
**51373 Leverkusen (DE)**

(72) Erfinder:
• **WILKENHOENER, Uwe**
**42107 Wuppertal (DE)**
• **MERSCH, Frank**
**42799 Leichlingen (DE)**

(56) Entgegenhaltungen:
**EP-A1- 0 892 019**    **WO-A1-00/78874**
**WO-A1-2009/109705**    **US-A- 5 082 887**

EP 2 877 539 B1

**Beschreibung**

Gebiet der Erfindung

Die Erfindung betrifft Titandioxid- und Carbonat-haltige Kompositpigmente, ihre Herstellung und ihre Verwendung zur Verbesserung der Pigment-Lichtstreueffizenz in Beschichtungen, Kunststoffen und Laminat.

Technologischer Hintergrund der Erfindung

Anorganische Pigmente und insbesondere Titandioxidpigment werden oft in verschiedene Matrices als Weißmacher, Tönungsmittel oder Trübungsmittel eingearbeitet. Titandioxid streut aufgrund seiner hohen Brechkraft Licht besonders effizient und ist deswegen das wichtigste Weißpigment in den Anwendungsbereichen Farben und Lacke, Kunststoffe, Papier und Fasern. Die Lichtstreueffizienz sinkt, wenn die Titandioxidpartikel in einem geringeren Abstand als etwa der halben Wellenlänge des Lichts, also etwa 0,20 bis 0,25 $\mu$m voneinander entfernt in der Matrix verteilt sind. Die Lichtstreueffizienz wird typischerweise mit Hilfe des Deckvermögens bzw. des Aufhellvermögens (tinting strength) des Titandioxidpigments in der Matrix gemessen.

Titandioxid ist auf der anderen Seite ein signifikanter Kostenfaktor, und es wird seit längerem nach Möglichkeiten gesucht, um die Einsatzmenge an Titandioxid zu verringern, ohne signifikante Einbußen im Deckvermögen hinnehmen zu müssen. Eine Einsparung ist möglich durch die Kombination von Titandioxidpartikeln mit geeigneten Füllstoffen, die als sogenannte "Extender-Partikel" als Abstandshalter für die $TiO_2$-Partikel wirken sollen. Die bekannten Verfahren umfassen sowohl die einfache Mischung der Komponenten als auch die Verbindung der $TiO_2$-Partikel mit den Extender-Partikeln mittels eines ausgefällten Bindemittels oder die in situ-Ausfällung des Extenders auf der Oberfläche der Titandioxidpartikel. Desweiteren sind Verfahren bekannt, um die feinen Titandioxidpartikel auf gröberen Füllstoffpartikeln zu verteilen.

Aus dem umfangreich vorliegenden Stand der Technik werden im Folgenden nur ausgewählte Schriften zitiert.

WO 1999/035193 A1 beschreibt beispielsweise die Herstellung einer Pigmentmischung aus Titandioxid und einem anorganischen Extender ("Spacer") wie $SiO_2$ oder $CaCO_3$ zur Verwendung bei der Papierherstellung.

DE 10 057 294 C5 offenbart ein Pigmentgemisch aus Titandioxid und Talkum zum Einsatz in Dekorrohpapier.

EP 0 861 299 B1 offenbart ein Titandioxidpigment, welches mit anorganischen Nanopartikeln, beispielsweise kolloidaler Kieselsäure, sowie einer Schicht aus anorganischen Oxiden wie Aluminium-, Silicium- oder Zirkonoxid beschichtet ist, wobei die anorganische Oxidschicht entweder zwischen Titandioxidoberfläche und Nanopartikeln angeordnet ist oder die äußere Deckbeschichtung bildet. Bei den anorganischen Nanopartikeln handelt es sich um $SiO_2$, $Al_2O_3$ oder $CaCO_3$.

DE 10 2006 012 564 A1 offenbart Titandioxidpigmentpartikel, auf deren Oberfläche sich Mikrohohlkugeln sowie eine Aluminiumoxid-Aluminiumphosphat-Beschichtung befinden.

In dem Verfahren gemäß EP 0 956 316 B1 werden Pigmentteilchen und gefälltes Calciumcarbonat (PCC) in wässriger Phase miteinander vermischt, so dass ein Kompositpigment entsteht, bei dem die Carbonatteilchen mit einer Teilchengröße von 30 bis 100 nm an die Oberfläche der Pigmentteilchen angeheftet sind. Das Kompositpigment enthält 30 bis 90 Gew.-% gefälltes Calciumcarbonat.

DE 1 792 118 A1 offenbart die in situ-Ausfällung von Calciumcarbonat in einer Titandioxidpigmentsuspension durch Vermischen einer Calciumchlorid- und einer Natriumcarbonatlösung, wobei eine dieser Lösungen Titandioxidpigment enthält. Es entstehen Calciumcarbonat-Titandioxid-Kompositpartikel.

WO 2000/001771 A1 offenbart ein Kompositpigment, das anorganische Partikel einer Partikelgröße von etwa 1 bis 10 $\mu$m enthält und an deren Oberfläche in Folge entgegengesetzter Oberflächenladung Titandioxidpigmentpartikel geheftet sind. Die Herstellung erfolgt in einer wässrigen Phase. Die anorganischen Partikel sind ausgewählt aus gängigen Füllstoffen wie z.B. Kaolin, Ton, Talkum, Glimmer oder Carbonate.

EP 0 892 019 A1 beschreibt ein Verfahren zur Herstellung von Kompositpigment, das insbesondere für Papier geeignet ist. Das Pigment umfasst feines partikuläres Material und Fasern wie Titandioxid, Kaolin-enthaltendes Material, feines Siliciumdioxid und plastisches Pigmentmaterial sowie *in situ* gefälltes Calciumcarbonat mit einem Gewichtsanteil von mindestens 50 Gew.% bezogen auf das Gesamtgewicht des Pigments.

Das Dokument US 5 082 019 A richtet sich auf ein Verfahren zur Herstellung von Kompositpigment, das ebenfalls zur Anwendung in Papieren geeignet ist und (meth)acrylische Polymere oder Copolymere als Füllstoffe beinhaltet.

WO 00/109705 offenbart ein Kompositpigment umfassend ein Weißpigment, das *in situ* gefälltes Calciumcarbonat sein kann, und ein feinteiliges Material wie Titandioxid. Das Kompositpigment umfasst das Weißpigment mit einem Gewichtsanteil von mindestens 50 Gew.% bezogen auf das Gesamtgewicht des Kompositpigments umfasst.

WO 2013/023018 A1 offenbart eine Pigmentmischung aus Trägerpartikeln, Pigmentpartikeln und kolloidalen Spacerpartikeln, wobei sich die Spacerpartikel auf der Oberfläche der Pigmentpartikel befinden und die Pigmentpartikel mit den Spacerpartikeln wiederum auf der Oberfläche der Trägerpartikel dispergiert sind.

Aufgabenstellung und Kurzbeschreibung der Erfindung

Der Erfindung liegt die Aufgabe zugrunde, ein alternatives Kompositpigment mit einem reduzierten Titandioxidgehalt zu schaffen, mit welchem im Vergleich zu reinem Titandioxid ein gleiches Deckvermögen erreicht werden kann, sowie ein Verfahren zu seiner Herstellung.

Die Aufgabe wird gelöst durch ein Titandioxid- und Carbonat-haltiges Kompositpigment, enthaltend:

- Titandioxidpartikel,
- mindestens einen anorganischen Füllstoff ausgewählt aus der Gruppe Calcium-Magnesium-Carbonate und Magnesium-Carbonate, natürliche Phosphate, Hydroxide, Perlite und Glasmehl sowie
- zumindest teilweise in situ gefälltes Calciumcarbonat in einer Menge von weniger als 30 Gew.-% bezogen auf Kompositpigment.

Die Aufgabe wird desweiteren gelöst durch ein Verfahren zur Herstellung von Titandioxid- und Carbonat-haltigen Kompositpigmentpartikeln unter Verwendung der Komponenten Titandioxid, mindestens ein anorganischer Füllstoff sowie lösliche Calciumquelle und Carbonatquelle als zwei Reaktionskomponenten, umfassend folgende Schritte:

a) Herstellen einer wässrigen Suspension mit Titandioxidpartikeln, mindestens ein Füllstoffpartikel ausgewählt aus der Gruppe Calcium-Magnesium-Carbonate und Magnesium-Carbonate, natürliche Phosphate, Hydroxide, Perlite und Glasmehl und der einen Reaktionskomponente,
b) Zugabe der zweiten Reaktionskomponente und Einstellung des pH-Werts der Suspension auf >8, bevorzugt >8,5
c) Abtrennen der Kompositpigmentpartikel aus der Suspension, wobei die Menge der zugegebenen löslichen Calciumquelle weniger als 30 Gew.-% gerechnet als $CaCO_3$ bezogen auf Kompositpigment beträgt.

Weitere vorteilhafte Ausformungen der Erfindung sind in den Unteransprüchen angegeben.

Figuren

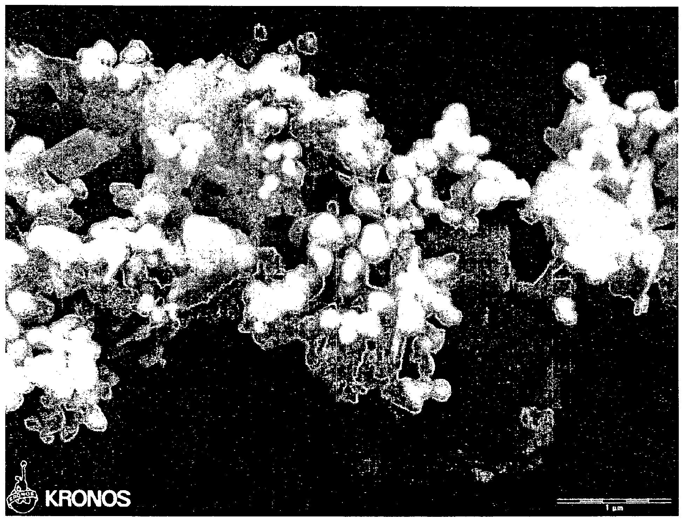

Figur 1 zeigt eine rasterelektronenmikroskopische Aufnahme des erfindungsgemäßen Kompositpigments mit einer Zusammensetzung gemäß Beispiel 3.

Beschreibung der Erfindung

Alle im Folgenden offenbarten Angaben bezüglich Größe in $\mu$m usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Die erfindungsgemäßen Kompositpigmentpartikel zeichnen sich dadurch aus, dass Titandioxidpigmentpartikel auf der Oberfläche von anorganischen Füllstoffpartikeln (Extender) homogen verteilt sind und mittels in situ gefälltem Calciumcarbonat ein starker Verbund zwischen Extenderpartikel und Titandioxidpigmentpartikel hergestellt wird, der in der weiteren üblichen Verarbeitung beim Anwender wie z.B. Dispergierung in einem Dissolver oder in einem Inline-Dispergierer nicht getrennt werden kann.

Die erfindungsgemäßen Kompositpigmentpartikel unterscheiden sich insofern von entsprechenden Kompositpartikeln oder Pigmentmischungen aus dem Stand der Technik - insbesondere von den in WO 2009/109705 A1 und WO 2013/023018 A1 offenbarten Zusammensetzungen -, als dass das erfindungsgemäß in situ gefällte Calciumcarbonat in erster Linie den Verbund zwischen Füllstoffpartikel und Titandioxidpartikel herstellt und nicht die Oberfläche der Titandioxidpartikel bedeckt und nicht als Abstandshalter (Spacer) für die Titandioxidpartikel untereinander wirkt (s. Fig. 1).

Unter Titandioxidpartikel oder Titandioxidpigmentpartikel werden im Rahmen der Erfinder Partikel im Größenbereich von etwa 100 nm bis etwa 1 $\mu$m verstanden.

Die erfindungsgemäßen Kompositpigmentpartikel enthalten das Pigment in nahezu ideal dispergierter Form und führen damit zu einer Steigerung der Effizienz der Lichtstreuung des Titandioxidpigments. Auf diese Weise kann der Teil des Pigments, der nicht ideal dispergiert, sondern "geflockt" vorliegt, eingespart werden. Die Kompositpigmentpartikel führen im Anwendersystem bei gleicher Pigmentmenge zu verbessertem Deckvermögen, bzw. erlauben im Anwendersystem eine Reduktion des Pigmentgehalts bei gleichbleibendem Deckvermögen.

Die erfindungsgemäßen Kompositpigmentpartikel werden unter Verwendung der Komponenten Titandioxid, mindestens ein anorganischer Füllstoff sowie eine lösliche Calciumquelle und eine Carbonatquelle als zwei Reaktionskomponenten hergestellt. Dabei wird eine wässrige - insbesondere gut dispergierte - Suspension mit Titandioxidpartikeln, anorganischen Füllstoffpartikeln und einer Reaktionskomponente hergestellt. In die Suspension wird die zweite Reaktionskomponente gegeben und der pH-Wert auf >8, bevorzugt >8,5 eingestellt. Abschließend werden die Kompositpartikel aus der Suspension abgetrennt. Die Menge der zugegebenen löslichen Calciumquelle beträgt weniger als 30 Gew.-% gerechnet als $CaCO_3$ und bezogen auf Kompositpigment.

In einer ersten Ausführung der Erfindung können die Kompositpigmentpartikel folgendermaßen hergestellt werden: Es wird eine wässrige Suspension von Titandioxidpartikeln und Calciumcarbonatpartikeln (als lösliche Calciumquelle) hergestellt und auf einen sauren pH-Wert von weniger als 5, bevorzugt weniger als 4,3 eingestellt - gegebenenfalls mittels einer sauer reagierenden Verbindung, so dass sich die Calciumcarbonatpartikel vollständig oder zumindest zu mehr als 50% lösen.

Anschließend wird ein Füllstoff wie hierin beschrieben und eine Carbonatquelle zugegeben, so dass Calciumcarbonat erneut ausfällt und ein Verbund zwischen Titandioxidpartikeln, Füllstoffpartikeln und Calciumcarbonatpartikeln entsteht. Bevorzugt handelt es sich bei der Carbonatquelle um ein basisches Carbonat, beispielsweise Natriumcarbonat.

Alternativ kann anstelle der Zugabe der basischen Carbonatverbindung der pH-Wert der Suspension durch Zugabe einer basischen Verbindung auf mehr als 8, bevorzugt mehr als 8,5 eingestellt und anschließend Kohlendioxidgas eingeleitet werden.

Grundsätzlich können oberflächenbehandelte oder unbehandelte Titandioxidpigmentpartikel verwendet werden. Bevorzugt werden unbehandelte Titandioxidgrundkörper-Partikel verwendet, insbesondere Titandioxidgrundkörper-Partikel aus dem Chloridprozess. Die Titandioxidpigmentpartikel können dotiert sein, vorzugsweise mit Aluminium. Wirtschaftlich besonders vorteilhaft ist es, nach dem Chloridprozess hergestellte, nicht-sandgemahlene und nicht-entchlorte Titandioxidgrundkörper-Partikel einzusetzen. Alternativ ist es auch möglich, sandgemahlene und entchlorte Titandioxidgrundkörper-Partikel aus dem Chloridprozess einzusetzen.

Als lösliche Calciumquelle können beispielsweise Calciumsalze wie Calciumchlorid, Calciumnitrat oder Calciumhydroxid eingesetzt werden. Desweiteren kann Calciumcarbonat in Form einer dem Fachmann bekannten kommerziell üblichen Calciumcarbonatvariante eingesetzt werden. Vorteilhafterweise verfügt das eingesetzte Calciumcarbonat über einen hohen Weißgrad und eine Partikelgröße von maximal etwa 100 $\mu$m, bevorzugt 1 bis 40 $\mu$m und insbesondere 1 bis 20 $\mu$m. Bevorzugt wird natürliches Calciumcarbonat in Form von Kreide oder Marmormehl verwendet.

Als sauer reagierende Verbindung sind beispielsweise anorganische Säuren wie Salzsäure oder Salpetersäure einsetzbar. Es sind desweiteren sauer reagierende Salze, deren Kationen das Gefüge und die spätere Verwendung der Kompositpigmentpartikel in den Anwendersystemen nicht stören, geeignet. Besonders vorteilhaft ist der Einsatz von sauer reagierenden Verbindungen, die im Rahmen der Titandioxidherstellung anfallen wie Titanylchlorid (Titanoxychlorid) sowie Salzsäure oder unterchlorige Säure, die prozessbedingt im Chloridverfahren anfallen. Die Säuren entstehen im Chloridverfahren z.B. durch Lösen des Chlorgases bei der Überführung des Pigments in die wässrige Phase.

Die Herstellung einer sauren Suspension von Titandioxid und löslicher Calciumquelle - beispielsweise Calciumcarbonat - kann in variabler Reihenfolge geschehen. Beispielsweise kann zunächst eine wässrige Suspension von Titandioxid- und Calciumcarbonatpartikeln hergestellt werden, deren pH-Wert in etwa neutral ist, und erst anschließend die saure Komponente hinzugefügt werden. Alternativ kann nicht-entchlorte Titandioxidgrundkörper-Suspension aus dem Chloridprozess eingesetzt werden, deren pH-Wert in der Regel im Bereich von 2,5 bis 4 liegt. Nach Zugabe von Calciumcarbonat wird der pH-Wert gegebenenfalls durch Zugabe einer weiteren sauren Komponente auf einen pH-Wert von <5, bevorzugt <4,3 eingestellt. Bei einem pH-Wert <5 geht Calciumcarbonat erfahrungsgemäß in Lösung.

In einer weiteren Ausführung der Erfindung kann als lösliche Calciumquelle beispielsweise Calciumchlorid, Calciumnitrat oder Calciumhydroxid in die Titandioxidsuspension gegeben werden und anschließend der pH-Wert der Suspension gegebenenfalls durch Zugabe einer sauren Komponente auf <5 bevorzugt <4,3 eingestellt werden.

Als Füllstoff kommen im Prinzip alle dem Fachmann bekannten kommerziellen anorganischen Füllstoffe, auch als Mischungen in Frage. Als anorganische Füllstoffe sind beispielsweise geeignet: natürliche oder gefällte Calcium- oder Calcium-Magnesium- oder Magnesium-Carbonate wie Marmormehl, Kreide, gefälltes Calciumcarbonat (PCC), Dolomit, Huntit, Hydromagnesit oder Magnesit. Unter "Carbonate"

fallen in diesem Zusammenhang auch Carbonate mit Hydroxidgruppen und/oder Kristallwasser. Weiterhin geeignet sind Sulfate wie Bariumsulfat und Calciumsulfat, natürliche Phosphate, Hydroxide wie Magnesiumhydroxid, Aluminiumhydroxid oder - oxidhydrat und Oxide wie beispielsweise Siliciumdioxid in natürlicher, gemahlener, pyrogener oder gefällter Form wie Quarzmehl, Kieselgur, usw. Weiterhin geeignet sind beispielsweise Silikate und Alumosilikate wie Talkum, Zeolithe, Kaolin, Wollastonit, Glimmer, ungebrannte und gebrannte Tonminerale. Ebenfalls geeignet sind beispielsweise Perlite und Glasmehl. Weiterhin können anorganische Fasern als Füllstoff verwendet werden.

Bevorzugt werden weiße Füllstoffe eingesetzt. Besonders bevorzugt sind Ca-Mg- oder Mg-Carbonate wie Dolomit, Huntit, Hydromagnesit oder Magnesit.

Die Füllstoffpartikel weisen in der Regel eine Partikelgröße von mehr als 1 $\mu$m auf. Geeignet sind Partikelgrößen von mindestens 1 bis 30 $\mu$m, bevorzugt 2 bis10 $\mu$m.

Nachfolgend ist auf intensives Rühren bzw. Dispergieren der Mischung zu achten. Vorzugsweise kommen hier dem Fachmann bekannte Dispergieraggregate wie Dissolver oder auch diverse Bauarten von Inline-Dispergierern zum Einsatz. Die Intensität und Zeit der Dispergierung variiert je nach verwendeten Füllstoffen und Pigmenten und entspricht den Einstellungen, die auch bei der Herstellung von Dispersionsfarben verwendet werden. Dem Fachmann sind derartige Prozesse bekannt.

Anschließend wird der Suspension eine basische Carbonatverbindung zugegeben, beispielsweise Natriumcarbonat. Die Menge der zugegebenen basischen Carbonatverbindung wird so bemessen, dass der pH-Wert der Suspension auf >8, bevorzugt >8,5 steigt und das gelöste Calciumcarbonat wieder ausfällt

Alternativ kann anstelle der Zugabe der basischen Carbonatverbindung der pH-Wert der Suspension durch Zugabe einer basischen Verbindung auf mehr als 8 bevorzugt >8,5 eingestellt und anschließend Kohlendioxidgas eingeleitet werden, woraufhin Calciumcarbonat ausfällt.

Wie oben beschrieben, ist auch hier auf intensive Durchmischung der Suspension während der Fällung zu achten.

Abschließend werden die Kompositpigmentpartikel aus der Suspension per Filtration abgetrennt, gewaschen und getrocknet.

In einer zweiten Ausführung der Erfindung werden die Kompositpigmentpartikel nach folgendem Verfahren hergestellt: In eine wässrige Suspension von Titandioxidpartikeln, die einen alkalischen pH-Wert aufweisen kann, wird als erste Reaktionskomponente eine basische Carbonatverbindung gegeben, beispielsweise Natriumcarbonat. Anschließend wird mindestens ein anorganischer Füllstoff in die Suspension gegeben. Geeignete Füllstoffe sind bereits oben aufgelistet. Anschließend wird als zweite Reaktionskomponente eine lösliche Calciumquelle und falls erforderlich eine basisch reagierende Verbindung zugegeben, so dass sich ein pH-Wert von >8, bevorzugt >8,5 in der Suspension einstellt. Als lösliche Calciumquelle kommen z.B. $CaCl_2$, $Ca(NO_3)_2$ oder $Ca(OH)_2$ in Frage. Alternativ kann eine lösliche Calciumquelle, beispielsweise $CaCl_2$, $Ca(NO_3)_2$ oder $Ca(OH)_2$ auch als erste Reaktionskomponente verwendet werden, wobei der pH-Wert der Suspension auf >8, bevorzugt >8,5 eingestellt wird. Als zweite Reaktionskomponente würde dann die Carbonatquelle in Form einer basischen Carbonatverbindung oder in Form von $CO_2$-Gas zusammen mit einer basischen Verbindung zugegeben werden.

Wie oben beschrieben, ist auf intensive Durchmischung der Suspension während der Fällung zu achten. Abschließend werden die Kompositpigmentpartikel aus der Suspension per Filtration abgetrennt, gewaschen und getrocknet.

Erfindungsgemäß beträgt die Menge der zugegebenen löslichen Calciumquelle weniger als 30 Gew.-% bevorzugt 10 bis 25 Gew.-% gerechnet als $CaCO_3$ und bezogen auf Kompositpigmentpartikel. Bevorzugt enthalten die Kompositpigmentpartikel maximal 70 Gew.-% $TiO_2$, insbesondere maximal 50 Gew.-% $TiO_2$ und insbesondere bevorzugt maximal 30 Gew.-% $TiO_2$.

Je nach gewünschter Qualität der mit den Kompositpigmentpartikeln hergestellten Farbe oder Lack kann die Effektivität des Titandioxids optimiert werden. Durch Einsparung von Pigment, erreicht durch die effektivere Nutzung im Kompositpigmentpartikel, ergibt sich ein wirtschaftlicher Vorteil im Vergleich zum getrennten Einsatz von Extender und Pigment. Die Verwendung der erfindungsgemäß hergestellten Kompositpigmentpartikel im Anwendersystem ermöglicht eine Pigmenteinsparung von bis zu 30%, bevorzugt 15 bis 30% bei sonst gleichen optischen Eigenschaften.

Das im Anwendersystem benötigte $TiO_2$ kann entweder als Kombination von erfindungsgemäßem Kompositpigment und reinem $TiO_2$ oder im Vollaustausch nur in Form des erfindungsgemäßen Kompositpigments zugegeben werden.

Ein weiterer Vorteil liegt darin, dass das $TiO_2$ auf dem Kompositpigmentpartikel bereits gut verteilt vorliegt und somit Energie für die Dispergierung im Lacksystem eingespart werden kann. Die gröberen Extender- und Kompositpigmentpartikel benötigen weniger Dispergier- und Mahlenergie und geringere Mengen an Dispergiermitteln. Hierdurch ergibt sich durch die Verwendung der Komposite ein weiterer Vorteil für den Lackhersteller.

In einer weiteren Ausführung des erfindungsgemäßen Verfahrens können die erfindungsgemäßen Kompositpigmentpartikel zusätzlich mit Phosphorsäure oder Natriumsilikat behandelt werden, wodurch eine verbesserte Säurebeständigkeit des Produkts erreicht wird.

Darüber hinaus ist es möglich, die erfindungsgemäßen Kompositpigmentpartikel mit den anorganischen Verbindungen zu behandeln, die bei der Titandioxidherstellung üblicherweise eingesetzt werden. Dem Fachmann sind die entsprechenden Verbindungen und Verfahrensweisen bekannt.

In einer besonderen Ausführung des erfindungsgemäßen Verfahrens können zusätzlich organische Additive in die Mischvorrichtung gegeben werden, vorzugsweise in einer Menge von 0,05 bis 30 Gew.-% bevorzugt 0,5 bis 10 Gew.-% bezogen auf Pigment-Extendermischung. Die organischen Additive können sowohl in fester als auch in flüssiger Form zugegeben werden. Geeignet als organische Additive sind zum einen handelsübliche wachsartige Additive mit oder ohne weitere chemische Funktionalisierung. Zum anderen sind bekannte Dispergieradditive oder andere in der Lacktechnologie übliche Hilfsstoffe beispielsweise für Rheologie, Entschäumung, Benetzung etc. geeignet.

Die erfindungsgemäßen Kompositpigmentpartikel sind insbesondere geeignet für die Verwendung in Innen- und Außendispersionsfarben sowie in weiteren wasserbasierten Lacksystemen. Sie können weiterhin eingesetzt werden in Kunststoffen und Laminat.

Beispiele

Die Erfindung wird anhand der folgenden Beispiele genauer beschrieben, ohne dass dadurch der Umfang der Erfindung eingeschränkt werden soll.

Zur Herstellung der Kompositpigmentpartikel wurden folgende Komponenten eingesetzt:

| | |
|---|---|
| Pigment: | ungemahlener und nicht entchlorter Titandioxidgrundkörper aus dem Chloridprozess |
| Extender 1: | Ultracarb 1250 von Minelco (Huntit-Hydromagnesit-Gemisch) |
| Extender 2: | Omyacarb 5GU von Omya, (Calciumcarbonat) |
| Additiv: | Calgon N (Natrium-Hexametaphosphat) |

Als Vergleichsbeispiele wurden die reinen Titandioxidpigmente KRONOS 2190 bzw. KRONOS 2310 eingesetzt.

Die Kompositpigmentpartikel hatten folgende Zusammensetzung (in Masseteilen):

| | Pigment | Extender1 | Extender2 | Additiv |
|---|---|---|---|---|
| Beispiel 1 | 30 | 60 | 10 | 0,5 |
| Beispiel 2 | 30 | 50 | 20 | 0,5 |
| Beispiel 3 | 30 | 40 | 30 | 0,5 |
| Vergleichsbeispiele | 100 | | | |

Die erfindungsgemäßen Kompositpigmentpartikel (Beispiel 1, 2, 3) wurden folgendermaßen hergestellt: 425 g einer wässrigen Suspension von ungemahlenen, nicht-entchlorten Titandioxid-Grundkörper-Partikeln mit einer Feststoffkonzentration von 42,3 Gew.% $TiO_2$ und einem pH-Wert von 3,7 wurden in einem geeigneten Gefäß vorgelegt. Unter Rühren wurden anschließend 180g Omyacarb 5GU (Calciumcarbonat) sowie 150g Wasser hinzugegeben. Diese Suspension wurde durch langsame Zugabe von insgesamt 430ml HCl (25%ig) auf einen pH-Wert von etwa 4,3 eingestellt und ca. 30min bei diesem pH-Wert gerührt. Anschließend erfolgte die Zugabe des Additivs (0,5 Gew.% bezogen auf Gesamt-Feststoff inklusive aller Füllstoffe). Zu dieser Suspension wurden nun unter intensiver Rührung 240g Ultracarb 1250 (Huntit-Hydromagnesit-Gemisch) gegeben und anschließend bei ca. 4000 Upm mit einer geeigneten Zahnscheibe für ca. 30 Minuten dispergiert. Nach der Dispergierung wurde bei einem pH-Wert von ca. 8,5 unter Rühren 1050ml einer 20%igen Natriumcarbonat-Lösung zugegeben und das Calciumcarbonat wieder ausgefällt. Anschließend wurde die Suspension filtriert, mit ca. 5 l vollentsalztem Wasser gewaschen und ca. 16h bei 120°C im Trockenschrank getrocknet.

Figur 1 zeigt eine rasterelektronenmikroskopische Aufnahme des erfindungsgemäßen Kompositpigments mit der Zusammensetzung von Beispiel 3. Die isometrischen Partikel sind Titandioxid, die plattigen Partikel unterschiedlicher Größe sind der Füllstoff, die feinen Kristallaggregate sind ausgefälltes Calciumcarbonat.

Die Kompositpigmentpartikel und die kommerziellen $TiO_2$-Pigmente KRONOS 2190 (Vergleichsbeispiel 1) und KRONOS 2310 (Vergleichsbeispiel 2) wurden bezüglich ihrer Helligkeit (PLV L*) und des gelben Farbstichs (PLV b*) untersucht. Die Messergebnisse sind in Tabelle 1 zusammengefasst.

Tabelle 1: Optische Eigenschaften der erfindungsgemäßen Kompositpigmentpartikel

| | PLV (L*-Wert) | PLV (b*-Wert) |
|---|---|---|
| Beispiel 1 | 98,4 | 0,84 |
| Beispiel 2 | 98,5 | 1,07 |
| Beispiel 3 | 98,5 | 1,10 |
| Vergleichsbeispiel 1 | 98,0 | 1,13 |
| Vergleichsbeispiel 2 | 98,7 | 0,43 |

Anschließend wurden die Kompositpigmentpartikel in eine Innendispersionsfarbe mit der in Tabelle 2 angegebenen Rezeptur eingearbeitet, wobei das $TiO_2$-Pigment jeweils zu 20 Gew.-% (bezogen auf $TiO_2$-Pigment) durch die erfindungsgemäßen Kompositpigmentpartikel ersetzt wurde. Die Pigmentvolumenkonzentration (PVK) der Innendispersionsfarbe beträgt 78%.

Als Vergleich wurde die Innendispersionsfarbe auch mit dem kommerziellen $TiO_2$-Pigment KRONOS 2190 (Vergleichsbeispiel 1) sowie mit dem kommerziellen $TiO_2$-Pigment KRONOS 2310 (Vergleichsbeispiel 2) hergestellt.

Tabelle 2: Rezeptur der weißen Innendispersionsfarbe (Testfarbe)

| | |
|---|---|
| Wasser | 27,45 Gew.-% |

(fortgesetzt)

| | |
|---|---|
| Calgon N neu (Dispergiermittel) | 0,05 Gew.-% |
| Dispex N 40 (Dispergiermittel) | 0,30 Gew.-% |
| Agitan 315 (Entschäumer) | 0,20 Gew.-% |
| Acticid MBS (Algizid/Fungizid) | 0,40 Gew.-% |
| $TiO_2$-Pigment (KRONOS 2190) | 22,00 Gew.-% |
| Steamat (Füllstoff) | 7,00 Gew.-% |
| Socal $P_2$ (Füllstoff) | 2,00 Gew.-% |
| Omyacarb 2-GU (Füllstoff) | 11,80 Gew.-% |
| Omyacarb 5-GU (Füllstoff) | 15,50 Gew.-% |
| Celite 281 SS(Füllstoff) | 2,00 Gew.-% |
| Tylose MH 30000 YG8 (Zellulose) | 0,30 Gew.-% |
| Mowilith LDM 1871 (Bindemittel) | 11,00 Gew.-% |

Die Testfarbe wurde hinsichtlich Kontrastverhältnis (KV) untersucht. Die Messergebnisse sind in Tabelle 3 zusammengefasst.

Tabelle 3: Weiße Innendispersionsfarbe

| | Kontrastverhältnis (Mittelwert 80-125$\mu$m) | $TiO_2$-Pigmentgehalt [Gew.-%] |
|---|---|---|
| Beispiel 1 | 97,6 | 17,6 |
| Beispiel 2 | 97,5 | 17,6 |
| Beispiel 3 | 97,2 | 17,6 |
| Vergleichsbeispiel 1 | 97,6 | 22,0 |
| Vergleichsbeispiel 2 | 96,8 | 22,0 |

Testmethoden

Helligkeit (L*) und Farbstich (b*) der Kompositpigmentpartikel und der reinen Pigmente wurden an einem entsprechenden Pulverpressling (PLV-Test) mit einem HUNTERLAB Tristimulus Colorimeter nach folger Vorschrift bestimmt:

Das Pigment-Pulver wird vor der Herstellung des Presslings gemahlen. 100 g des Pulvers wird dazu in einen handelsüblichen Mixer (Hersteller: Braun, Modell: MX 2050) gegeben und 12 mal 5 sec. gemahlen. Zwischen jedem Mahlschritt wird der Mixer geöffnet und das Pulver nochmals durchgemischt. Zur Herstellung des Pulverpresslings legt man auf eine Bodenplatte mit kreisförmiger Vertiefung ein auf beiden Seiten mattes weißes Blatt Papier und drückt mit der Presse einen Metallring (Höhe 4 cm, Durchmesser 2,4 cm) in die Vertiefung. Etwa 25 g des gemahlenen Pulvers werden unter leichtem Schütteln und Klopfen in den Metallring gegeben. Mit einem Druck von 2 - 3 kN wird das Pulver zusammengepresst. Der Pressvorgang wird ein zweites Mal bis zum Erreichen des angestrebten Betriebsdruckes von 15 kN wiederholt. Durch vorsichtiges Drehen und Ziehen des Metallringes trennt man diesen von der Bodenplatte. Das Papier zwischen Bodenplatte und Ring wird entfernt. Im Ring befindet sich nun der Pressling, der für den Messvorgang am HUNTERLAB Colorimeter verwendet wird. Die Messwerte L* und b* werden am Colorimeter direkt abgelesen.

Zur Bestimmung des Kontrastverhältnisses wurde die nach Rezepturvorschrift hergestellte weiße Innendispersionsfarbe (Testfarbe) mit Spaltrakeln (80 - 125 $\mu$m) mittels automatischem Filmaufziehgerät mit einer Geschwindigkeit von 12,5 mm/s auf Morest-Kontrastkarten aufgezogen. Anschließend wurden die Farbwerte Y über schwarzem Untergrund ($Y_{(schwarz)}$) und Y über weißem Untergrund ($Y_{(weiß)}$) je dreimal mit dem Spektralphotometer Color-view gemessen. Das Kontrastverhältnis wurde nach folgender Formel errechnet:

$$KV\ [\%] = Y_{(schwarz)} / Y_{(weiß)} \times 100$$

Fazit

Die Verwendung erfindungsgemäßer Kompositpigmentpartikel aus Extender und Titandioxid-Pigment ermöglicht je nach gewählter Kombination Pigmenteinsparungen ohne oder mit nur geringen Verlusten der optischen Eigenschaften. Alternativ können bei gleichem Pigmentgehalt auch bessere Werte insbesondere im Aufhellvermögen erzielt werden.

**Patentansprüche**

1. Titandioxid- und Carbonat-haltiges Kompositpigment enthaltend:

   - Titandioxidpartikel,
   - mindestens einen anorganischen Füllstoff ausgewählt aus der Gruppe Calcium-Magnesium-Carbonate und Magnesium-Carbonate, natürliche Phosphate, Hydroxide, Perlite und Glasmehl sowie
   - Calciumcarbonat, welches in einer Menge von weniger als 30 Gew.-% bezogen auf Kompositpigment vorhanden ist und welches zumindest teilweise in situ gefällt ist.

2. Kompositpigment nach Anspruch 1 **dadurch gekennzeichnet, dass** die Titandioxidpartikel oberflächenbehandelte oder unbehandelte Titandioxidpigmentpartikel sind.

3. Kompositpigment nach Anspruch 1 oder 2 **dadurch gekennzeichnet, dass** der anorganische Füllstoff ausgewählt ist aus der Gruppe Dolomit, Huntit, Magnesit und Hydromagnesit.

4. Kompositpigment nach einem oder mehreren der Ansprüche 1 bis 3 **dadurch gekennzeichnet, dass** die Kompositpigmentpartikel abschließend mit Phosphorsäure oder Natriumsilikat behandelt werden.

5. Verfahren zur Herstellung von Titandioxid- und Carbonat-haltigen Kompositpigmentpartikeln unter Verwendung der Komponenten Titandioxid, mindestens ein anorganischer Füllstoff sowie lösliche Calciumquelle und Carbonatquelle als zwei Reaktionskomponenten, wobei als Carbonatquelle eine basische Carbonatverbindung eingesetzt wird, umfassend folgende Schritte:

   a) Herstellen einer wässrigen Suspension mit Titandioxidpartikeln, mindestens einem anorganischen Füllstoffpartikel ausgewählt aus der Gruppe Calcium-Magnesium-Carbonate und Magnesium-Carbonate, natürliche Phosphate, Hydroxide, Perlite und Glasmehl und der einen Reaktionskomponente,
   b) Zugabe der zweiten Reaktionskomponente und Einstellung des pH-Werts der Suspension auf >8, bevorzugt >8,5,
   c) Abtrennen der Kompositpigmentpartikel aus der Suspension, wobei die Menge der zugegebenen löslichen Calciumquelle weniger als 30 Gew.-% gerechnet als $CaCO_3$ bezogen auf Kompositpigment beträgt.

6. Verfahren nach Anspruch 5 **dadurch gekennzeichnet, dass**
   Schritt a) folgende Schritte umfasst:

   Bereitstellen einer wässrigen Suspension von Titandioxidpartikeln,
   Zugabe von Calciumcarbonat und gegebenenfalls mindestens einer sauer reagierenden Verbindung, wobei sich in der Suspension ein pH-Wert von <5, bevorzugt <4,3 einstellt, Zugabe mindestens eines Füllstoffs und in Schritt b) eine Carbonatquelle zugegeben wird.

7. Verfahren nach Anspruch 5 oder 6 **dadurch gekennzeichnet, dass** als lösliche Calciumquelle $CaCl_2$, $Ca(NO_3)_2$ oder $Ca(OH)_2$ eingesetzt wird.

8. Verfahren nach Anspruch 5 oder 6 **dadurch gekennzeichnet, dass** in Schritt a) als lösliche Calciumquelle $CaCO_3$ eingesetzt wird und der pH-Wert der Suspension auf <5, bevorzugt <4,3 eingestellt wird.

9. Verfahren nach einem oder mehreren der Ansprüche 5 bis 8 **dadurch gekennzeichnet, dass** als Titandioxidpartikel oberflächenbehandelte oder unbehandelte Titandioxidpigmentpartikel eingesetzt werden.

10. Verfahren nach Anspruch 5 **dadurch gekennzeichnet, dass** der anorganische Füllstoff ausgewählt ist aus der Gruppe Dolomit, Huntit, Magnesit und Hydromagnesit.

11. Verfahren nach einem oder mehreren der Ansprüche 5 bis 10 **dadurch gekennzeichnet, dass** die sauer reagierende Verbindung ausgewählt ist aus der Gruppe Salzsäure und Salpetersäure sowie Titanylchlorid, Salzsäure und unterchlorige Säure, welche im Chloridverfahren zur Herstellung von Titandioxid anfallen.

12. Verfahren nach einem oder mehreren der Ansprüche 5 bis 11 **dadurch gekennzeichnet, dass** die Kompositpigmentpartikel zusätzlich mit Phosphorsäure oder Natriumsilikat behandelt werden.

13. Verwendung der Kompositpigmentpartikel nach einem oder mehreren der Ansprüche 1 bis 4 in Laminaten, Beschichtungen und

**Claims**

1. Titanium dioxide- and carbonate-containing composite pigment, containing:

    - Titanium dioxide particles,
    - At least one inorganic extender selected from the group consisting of calcium-magnesium-carbonates, magnesium-carbonates, natural phosphates, hydroxides, perlite, and glass powder,
    - Calcium carbonate that is present in a quantity of less than 30% by weight, referred to composite pigment, and that is at least partially precipitated in situ.

2. Composite pigment according to Claim 1, **characterised in that** the titanium dioxide particles are surface-treated or untreated titanium dioxide pigment particles.

3. Composite pigment according to Claim 1 or 2, **characterised in that** the inorganic extender is selected from the group consisting of dolomite, huntite, hydromagnesite, and magnesite.

4. Composite particles according to one or more of Claims 1 to 3, **characterised in that** the composite pigment particles finally are treated with phosphoric acid or sodium silicate.

5. Method for manufacturing titanium dioxide- and carbonate-containing composite pigment particles by using the components titanium dioxide, at least one inorganic extender as well as a soluble calcium source and a carbonate source as two reaction components, comprising the steps:

    a) Provision of an aqueous suspension of titanium dioxide particles, at least one inorganic extender selected from the group consisting of calcium-magnesium-carbonates, magnesium-carbonates, natural phosphates, hydroxides, perlite, and glass powder, and one of the reaction components,
    b) Addition of the second reaction component and setting the pH value of the suspension to >8, preferably to >8.5,
    c) Separation of the composite pigment particles from the suspension, where the quantity of calcium carbonate added in Step b) is less than 30% by weight, referred to composite pigment.

6. Method according to Claim 5, **characterised in that** Step a) comprises the following steps:

    Provision of an aqueous suspension of titanium dioxide particles;
    Addition of calcium carbonate and if necessary of at least one acid reacting compound whereby a pH value of <5, preferably <4.3 is obtained in the suspension;
    Addition of at least one extender, and
    in Step b) a carbonate source is added.

7. Method according to Claim 5 or 6, **characterised in that** $CaCl_2$, $Ca(NO_3)_2$, or $Ca(OH)_2$ is used as soluble calcium source.

8. Method according to Claim 5 or 6, **characterised in that** in Step a) $CaCO_3$ is used as soluble calcium source and the pH value of the suspension is set to <5, preferably to <4.3.

9. Method according to one or more of Claims 5 to 8, surface-treated or untreated titanium dioxide pigment particles are used as the titanium dioxide particles.

10. Method according to Claim 9, **characterised in that** the inorganic extender is selected from the group comprising dolomite, huntite, hydromagnesite and magnesite.

**11.** Method according to one or more of Claims 5 to 10, **characterised in that**
the acid-reacting compound is selected from the group comprising hydrochloric acid, nitric acid, and hypochlorous acid occurring in the chloride process for obtaining titanium dioxide.

**12.** Method according to one or more of Claims 5 to 11, **characterised in that**
the composite pigment particles finally are treated with phosphoric acid or sodium silicate.

**13.** Use of the composite pigment particles according one or more of Claims 1 to 4 in laminates, coatings, and polymers.

**Revendications**

**1.** Pigment composite contenant du dioxyde de titane et du carbonate, contenant :

   - des particules de dioxyde de titane,
   - au moins un agent de charge inorganique choisi dans le groupe comprenant des carbonates de calcium-magnésium et des carbonates de magnésium, des phosphates naturells, des hydroxydes, des perlites et de la poudre de verre ainsi que
   - du carbonate de calcium qui est présent en une quantité inférieure à 30 % en poids par rapport au pigment composite et qui est précipité au moins en partie in situ.

**2.** Pigment composite selon la revendication 1,
**caractérisé en ce que**
les particules de dioxyde de titane sont des particules de pigment de dioxyde de titane traitées en surface ou non traitées.

**3.** Pigment composite selon la revendication 1 ou 2,
**caractérise en ce que**
l'agent de charge inorganique est choisi dans le groupe comprenant de la dolomite, de la huntite, de la magnésite et de l'hydromagnésite.

**4.** Pigment composite selon une ou plusieurs des revendications 1 à 3,
**caractérisé en ce que**
les particules de pigment composite sont ensuite traitées avec de l'acide phosphorique ou du silicate de sodium.

**5.** Procédé de production de particules de pigment composite contenant du dioxyde de titane et au carbonate en utilisant les composants dioxyde de titane, au moins un agent de charge inorganique ainsi qu'une source de calcium et une source de carbonate solubles en tant que deux composants réactionnels, dans lequel on utilise comme source de carbonate, un composé de carbonate basique, comprenant les étapes suivantes :

   a) production d'une suspension aqueuse avec des particules de dioxyde de titane, au moins une particule d'agent de charge inorganique choisie dans le groupe comprenant des carbonates de calcium-magnésium et des carbonates de magnésium, des phosphates naturels, des hydroxydes, des perlites et de la poudre de verre et le composant réactionnel,
   b) addition du deuxième composant réactionnel et ajustement du pH de la suspension à > 8, de préférence à > 8,5,
   c) séparation des particules de pigment composite de la suspension, dans lequel la quantité de source de calcium soluble ajoutée est inférieure à 30 % en poids, calculée en tant que $CaCO_3$ par rapport au pigment composite.

**6.** Procédé selon la revendication 5,
**caractérisé en ce que**
dans lequel l'étape a) comprend les étapes suivantes :
mise à disposition d'une suspension aqueuse de particules de dioxyde de titane,

   addition de carbonate de calcium et éventuellement d'au moins un composé réagissant à l'acide, dans lequel dans la suspension, un pH de < 5, de préférence de < 4,3 est ajusté,
   addition d'au moins un agent de charge, et
   dans lequel à l'étape b), une source de carbonate es ajoutée.

**7.** Procédé selon la revendication 5 ou 6,
**caractérisé en ce que**
l'on utilise comme source de calcium soluble, du $CaCl_2$, du $Ca(NO_3)_2$ ou du $Ca(OH)_2$.

**8.** Procédé selon la revendication 5 ou 6,
**caractérisé en ce**
**qu'**à l'étape a) on utilise comme source de calcium du $CaCO_3$ et le pH da la suspension est ajusté à < 5, de préférence à < 4,3.

**9.** Procédé selon une ou plusieurs des revendications 5 á 8,
**caractérisé en ce que**
l'on utilise comme particules de dioxyde de titane, des particules de pigment de titane traitées en surface ou non traitées en surface.

**10.** Procédé selon la revendication 9,
**caractérisé en ce que**
l'agent de charge est choisi dans le groupe comprenant de la dolomite, de la huntite, de la magnésite et de l'hydromagnésite.

**11.** Procédé selon une ou plusieurs de revendications 5 à 10,
**caractérisé en ce que**
le composé réagissant á l'acide est choisi dans le groupe comprenant de l'acide chlorhydrique et de l'acide nitrique ainsi que du chlorure de titanyle, de l'acide chlorhydrique et de l'acide hypochloreux, qui précipitent dans un procédé de chlorure pour produire du dioxyde de titane.

**12.** Procédé selon une ou plusieurs des revendications 5 à 11,
**caractérisé en ce que**
les particules de pigment composite sont traitées en outre avec de l'acide phosphorique ou du silicate de sodium.

**13.** Utilisation des particules de pigment composite selon une ou plusieurs des revendications 1 à 4 dans des stratifiés, des revêtements et des matières plastiques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 1999035193 A1
- DE 10057294 C5
- EP 0861299 B1
- DE 102006012564 A1
- EP 0956316 B1
- DE 1792118 A1
- WO 2000001771 A1
- EP 0892019 A1
- US 5082019 A
- WO 00109705 A
- WO 2013023018 A1
- WO 2009109705 A1